# EUROPÄISCHE PATENTSCHRIFT

(11) **EP 1 257 557 B1**
(45) Veröffentlichungstag und Bekanntmachung des Hinweises auf die Patenterteilung: **10.09.2003**
(21) Anmeldenummer: 01936052.8
(22) Anmeldetag: 16.02.2001
(51) Int. Cl.: C07F 9/38

(54) **VERFAHREN ZUR HERSTELLUNG VON N-(PHOSPHONOMETHYL)GLYCIN**
METHOD FOR PRODUCING N-(PHOSPHONOMETHYL)GLYCINE
PROCEDE DE PREPARATION DE N-(PHOSPHONOMETHYL)GLYCINE

(30) Priorität: 19.02.2000 DE 10007702
(43) Veröffentlichungstag der Anmeldung: 20.11.2002
(73) Patentinhaber: Monsanto Technology LLC, St. Louis, Missouri 63167 (US)
(72) Erfinder: HITZLER, Martin, 83342 Tacherting (DE); THALHAMMER, Franz, 83308 Trostberg (DE); HAMMER, Benedikt, 83342 Tacherting (DE)
(74) Vertreter: Bosch, Henry A.
(86) Internationale Anmeldenummer: EP0101749
(87) Internationale Veröffentlichungsnummer: WO01060830

(56) Entgegenhaltungen:
- EP-A- 0 323 821
- WO-A-97/05149
- DE-A- 19 938 622
- US-A- 5 948 938
- "RECYCLE PROCESS" RESEARCH DISCLOSURE,KENNETH MASON PUBLICATIONS, HAMPSHIRE,GB, Nr. 40466, Dezember 1997 (1997-12), Seite 942 XP000735768 ISSN: 0374-4353

## Beschreibung

Die vorliegende Erfindung betrifft ein Verfahren zur Herstellung von N-(Phosphonomethyl)glycin (PMG), welches eine sehr effektive und kostengünstige Rückführung von Abwasserströmen aus vorhergehenden Prozessen zur Herstellung von N-(Phosphonomethyl)glycin ausgehend von N-(Phosphonomethyl)iminodiessigsäure (PMIDA) ermöglicht.

N-(Phosphonomethyl)glycin ist in der Landwirtschaft ein unter dem Namen *Glyphosate* bekanntes hochwirksames Herbizid mit voll-systemischer Wirkungsweise. Es erfasst ein- und mehrjährige Unkräuter und Ungräser. Die Anwendung ist vielseitig und hat weltweit enorme wirtschaftliche Bedeutung erlangt.

Für die Herstellung von Glyphosate gibt es entsprechend dem Stand der Technik einige Produktionsverfahren. Beispielsweise beschreibt *Monsanto* in den Patenten US 3,950,402; EP 0 472 693 B1; US 4,147,719 Verfahren zur Oxidation von PMIDA mit Sauerstoff oder Peroxiden wie Wasserstoffperoxid in Gegenwart eines auf Aktivkohle gebundenen Edelmetalls (Pt/C, Pd/C, Rh/C). In anderen Verfahren wird die Umsetzung nur mit Aktivkohle als Katalysator durchgeführt (EP-A 0 162 035; DE-OS 30 17 518; US 3,969,398; WO 96/38455; US-A-5 948 938. In der Patentschrift ES-B-2 050 624 ist beschrieben, PMIDA in Gegenwart eines Ionenaustauscherharzes - bevorzugt eines Kationenaustauschers in protonierter From - mit Peroxiden umzusetzen.

Die beschriebenen Verfahren, auch wenn sie hoch effizient sind, besitzen aber alle einen gemeinsamen Nachteil, nämlich dass bei der Produktion von Glyphosate große Mengen an Abwässern anfallen. In den genannten Prozessen wird typischerweise eine wässrige Lösung oder Suspension von N-(Phosphonomethyl)iminodiessigsäure mit Peroxiden oder Sauerstoff in Gegenwart eines heterogenen Katalysators zu Glyphosate umgesetzt. Der Einsatz von heterogenen Katalysatoren bedingt, dass das Produkt nach der Reaktion im Lösemittel vollständig gelöst sein muss, da sonst bei der Abtrennung des Katalysators auch das Produkt mit abgetrennt werden würde. Nun ist aber Glyphosate nur gering in Wasser löslich (5 °C: 0.8 %, 20 °C: 1.1 %, 95 °C: 6.5 %); in organischen Lösemitteln ist die Löslichkeit noch sehr viel geringer. Somit werden für diese Prozesse große Mengen an Wasser benötigt.

Nach der Abtrennung des Katalysators muss die Reaktionslösung eingeengt werden, um das Produkt zu isolieren, wobei ein Kondensat-Abwasserstrom entsteht (nachfolgend Kondensat genannt). Das Produkt wird dann filtriert oder zentrifugiert unter Bildung eines Filtrat-Abwasserstromes (nachfolgend Filtrat genannt).

Das Kondensat enthält als wesentliche Verunreinigungen Formaldehyd und Ameisensäure. Das Verunreinigungsprofil des Filtrats setzt sich aus einer Reihe von Neben- und Spaltprodukten - meist phosphorhaltigen Verbindungen - zusammen. Typischerweise enthält ein Filtrat noch 1 bis 4 Gew.-% Glyphosate. Die Entsorgung stellt auf Grund der Inhaltsstoffe ein Problem dar, da einige der Komponenten herbizide Eigenschaften besitzen. Außerdem kann aufgrund der Inhaltsstoffe weder das Kondensat noch das Filtrat als Reaktionsmedium wieder eingesetzt werden. Es ist daher von Interesse, die Restmengen an Glyphosate im Filtrat zu minimieren und die Mengen an Filtrat zu reduzieren. Die Vorteile liegen in einer höheren Effizienz des Produktionsprozesses, in der Einsparung von Entsorgungskosten und der Schonung der Umwelt.

Das Dokument *Research Disclosure, Nr*. *40466, Dezember 1997, Seite 942*, offenbart ein Verfahren zur Herstellung von N-(Phosphonomethyl)glycin, ausgehend von Aminomethanphosphonsäure, wobei das gewünschte Produkt durch Ansäuern erhalten wird und das am Ende der Reaktion erhaltene Filtrat verarbeitet und in den Reaktionsprozeß zurückgeführt wird.

In der WO 97/05149 wird eine Rückgewinnung von Glyphosate aus dem Filtrat beschrieben. Das Verfahren beruht auf der Abtrennung eines schwerlöslichen Komplexes, den Glyphosate mit Eisen(III)-Salzen (auch: Ca, Mg, Al) bildet. Durch Variation des pH-Werts kann Glyphosate wieder aus dem Komplex freigesetzt und anschließend isoliert oder in den Prozess zurückgeführt werden. Diese Art der Rückgewinnung ist jedoch sehr aufwendig und damit kostenintensiv.

Das EP-Patent Nr. 0 323 821 B1 offenbart die Behandlung von Filtraten aus Glyphosate-Prozessen. Hierzu werden die nach Abtrennung der Hauptmenge an Produkt im Filtrat verbliebenen Restmengen an PMIDA, Glyphosate und anderen Phosphonsäuren (z. B. Aminomethanphosphonsäure, kurz AMPS) mit Sauerstoff an Übergangsmetallkatalysatoren (z.B. Mn, Co, Fe) bei typischerweise 35 bar und 120 °C zerstört (> 85 % nach 6 Stunden). Diese Zerstörung der Inhaltsstoffe ist aber mit einem hohen prozesstechnischen Aufwand verbunden und somit in doppelter Hinsicht kostenintensiv.

Es wird ebenfalls auf die DE-199 38 622 hingewiesen, die vor dem Anmeldedatum hiervon eingereicht, jedoch nach diesem Datum veröffentlicht worden ist. Dieses Dokument beschreibt ein Verfahren zur Herstellung von N-(Phosphonomethyl)glycin
- a): durch Oxidation von N-(Phosphonomethyl)iminodiessigsäure (PMIDA) mit Peroxiden in wäßrigem Medium in Gegenwart eines heterogenen Katalysators im Temperaturbereich von 50 bis 100°C,
- b): anschließender Abtrennung des festen Katalysators aus der wäßrigen Reaktionssupension von Stufe a),
- c): Aufkonzentrierung der Reaktionslösung aus Stufe b), inbesondere durch Eindampfen sowie
- d): Abtrennung des N-(Phosphonomethyl)glycins aus der aufkonzentrierten Reaktionslösung aus Stufe c), insbesondere durch Filtration, wobei man als Katalysator Aktivkohle mit einer Korngrößenverteilung 98% ≤ 150 µm sowie ≤ 40% ≤ 10 µm verwendet. Die Mutterlauge aus Stufe d) wird vorteilhafterweise in Stufe b) und/oder Stufe c) ganz oder nach Ausschleusung eines Teilstroms zurückgeführt.

Der vorliegenden Erfindung lag daher die Aufgabe zugrunde, ein verbessertes Verfahren zur Herstellung von Glyphosate zu entwickeln, welches die genannten Nachteile entsprechend dem Stand der Technik zumindest teilweise vermeidet und die in der Mutterlauge enthaltenen Wertstoffe ohne größeren technischen Aufwand zurückgewinnt. Weiterhin soll eine Verringerung der beim Verfahren anfallenden Abwasserströmen erreicht werden.

Diese Aufgabe wird gelöst durch ein Verfahren zur Herstellung von N-(Phosphonomethyl)glycin (Glyphosate) durch
- (a): Oxidation von N-(Phosphonomethyl)iminodiessigsäure mit Peroxiden oder Sauerstoff in wässrigem Medium in Gegenwart eines heterogenen Katalysators,
- (b): anschließende Abtrennung des Katalysators aus der wässrigen Reaktionssuspension von Stufe (a),
- (c): Aufkonzentrierung der klaren Reaktionslösung aus Stufe (b), insbesondere durch Eindampfen, und
- (d): Abtrennung von N-(Phosphonomethyl)glycin aus der aufkonzentrierten Reaktionslösung aus Stufe (c), insbesondere durch Filtration,
welches dadurch gekennzeichnet ist, dass man die wässrige Reaktionslösung aus Stufe (d) (Mutterlauge) in Stufe (b) (Katalysatorabtrennung) und/oder Stufe (c) (Aufkonzentrierung) zurückführt.

Überraschenderweise wurde gefunden, dass sowohl die Restmenge an Glyphosate in der Mutterlauge als auch die Menge an Mutterlauge selbst erheblich reduziert werden können, wenn diese in Stufe (b) und/oder Stufe (c) zurückgeführt wird und gleichzeitig Glyphosate mit Hilfe des erfindungsgemäßen Verfahrens mit einem geringen technischen Aufwand in gesteigerter Ausbeute bei gleichbleibend hoher Reinheit isoliert werden kann.

Das Verfahren entsprechend der vorliegenden Erfindung umfasst mindestens vier Stufen. In der ersten Stufe (a) erfolgt die Oxidation von N-(Phosphonomethyl)iminodiessigsäure in wässriger Lösung, wobei die Reaktionsbedingungen in weiten Grenzen variiert werden können. Als Oxidationsmittel können Peroxide wie z. B. Wasserstoffperoxid oder sauerstoffhaltige Gase sowie Gemische davon eingesetzt werden. Ebenso kann die Auswahl des Katalysators weitgehend beliebig sein. Anwendung finden z. B. Edelmetall-Katalysatoren wie Palladium, Platin und Rhodium insbesondere auf Aktivkohle, reine Aktivkohle-Katalysatoren oder reine Edelmetall-Katalysatoren. Eine Auswahl an Aktivkohlen ist beispielsweise in den Druckschriften EP-A 162 035, US 3,969,398, WO 96/38 455, US-A-5 948 938 und der DE-OS 30 17 518 beschrieben. Die Reaktionsbedingungen für die Durchführung der Oxidationsreaktion können in weiten Bereichen variiert werden. So wird die Reaktionsstufe (a) üblicherweise in wässrigem Medium bei Temperaturen zwischen 50 und 150 °C, insbesondere 50 bis 100 °C, Drücken von 0,5 bis 50 bar und Katalysatoranteilen von 2 bis 50 Gew.-% bezogen auf die eingesetzte Menge an PMIDA durchgeführt. Bei der Umsetzung mit Peroxiden wird das Molverhältnis von PMIDA zu Peroxid auf vorzugsweise 1 : 1,5 bis 1 : 5 eingestellt. Wird mit einem sauerstoffhaltigen Gas oxidiert, so wird das Gas in der Regel unter Überdruck durch die Reaktionsmischung geleitet. Die Konzentration der Reaktionskomponenten in wässriger Suspension kann in weiten Bereichen variiert werden und wird vorzugsweise auf 1 bis 30 Gew.-% bezogen auf die eingesetzte N-(Phosphonomethyl)-iminodiessigsäure eingestellt. Die Reaktionszeiten sind verfahrensbedingt unterschiedlich und bewegen sich im Bereich von einigen Minuten bis zu mehreren Stunden.

In der anschließenden Stufe (b) wird der feste Katalysator aus der wässrigen Reaktionsstufe (a) abgetrennt, was nach bekannten Methoden wie z. B. Filtration oder Zentrifugation erfolgen kann. Vorzugsweise wird die Abtrennung durch Filtration im Temperaturbereich von 50 bis 100 °C gegebenenfalls auch unter Druck vorgenommen. Der abgetrennte Katalysator kann anschließend ohne weiteres in die Reaktionsstufe (a) zurückgeführt werden.

Nach der Abtrennung des Katalysators wird die klare Reaktionslösung aus Stufe (b) in der Stufe (c) beispielsweise durch Eindampfen aufkonzentriert, wobei dieser Aufkonzentrierungsschritt vorzugsweise bei Temperaturen von 20 bis 90 °C und im Vakuum von 20 bis 700 mbar bis zu einem bevorzugten Wassergehalt von 10 bis 70 Gew.-% durchgeführt wird.

Anschließend wird in Stufe (d) die Abtrennung des N-(Phosphonomethyl)-glycins aus der aufkonzentrierten Reaktionslösung aus Stufe (c) insbesondere durch Filtration, aber auch durch Zentrifugation vorgenommen. Gemäß einer bevorzugten Ausfübrungsform kann das Produkt (Glyphosate) einem Reinigungsschritt mit Wasser unterworfen werden und das Waschwasser mit der wässrigen Reaktionslösung aus Stufe (d) (Mutterlauge) vereinigt werden.

Es ist als erfindungswesentlich anzusehen, dass man die Mutterlauge (wässrige Reaktionslösung aus Stufe (d)) die üblicherweise geringe Mengen an Glyphosate (1 bis 4 Gew.-%) und Nebenprodukten enthält, zumindest teilweise in Stufe (b) (Katalysator-Abtrennung) und/oder Stufe (c) (Aufkonzentrierung) zurückführt.

Da die Oxidationsstufe (a) zur Herstellung von Glyphosate in der Regel batchweise erfolgt, wird die erfindungsgemäß vorgeschlagene Recyclisierung in der Form durchgeführt, dass die Mutterlauge bei der Aufarbeitung des nachfolgenden Ansatzes entweder in Stufe (b) und/oder Stufe (c) ganz oder teilweise eingesetzt wird. Auf diese Weise wird die Mutterlauge in einen Kreisprozess eingebunden, der sich u. U. beliebig oft wiederholen läßt, da keine merkliche Produktverschlechterung auch nach 5 bis 10 Reaktionszyklen festzustellen ist.

Beim erfindungsgemäßen Verfahren ergeben sich die folgenden Vorteile, die nach dem bisherigen Stand der Technik nicht erwartet werden konnten:
- **Steigerung der Ausbeute bei gleichbleibender Produktreinheit:**
   Die Mutterlauge stellt eine gesättigte Lösung von Produkt dar. Bei der Rückführung *steigert* sich die Ausbeute um die im Filtrat enthaltene Restmenge an Produkt, da die neue Mutterlauge wieder eine gesättigte Lösung des Produkts ist. Die Reinheit des Produkts bleibt überraschenderweise auch nach mehrfacher Rückführung der Mutterlauge in den Prozess erhalten.
- **Reduzierung der Menge an Filtrat:**
   Da die Reaktionssuspension immer auf die gleiche Menge des Reaktionsvolumens eingeengt wird, entsteht pro Ansatz die gleiche Menge an Mutterlauge. Man hat somit eine prozessinterne Aufkonzentrierung ohne zusätzlichen Aufwand an Apparaturen und ohne Mehrkosten. Die Gesamtmenge an als Abwasser anfallender Mutterlauge *reduziert* sich um die Anzahl der Rückführungen.

Aus den genannten Vorteilen ergibt sich eine Kostensenkung in doppelter Hinsicht, nämlich durch die Verringerung der Kosten für Glyphosate aufgrund der erhöhten Ausbeute und durch die Einsparung an Kosten für die Entsorgung der Mutterlauge.

Die nachfolgenden Beispiele sollen die Erfindung näher veranschaulichen.

### Beispiele

Die folgenden drei Beispiele mit Vergleichsbeispielen beziehen sich auf ein Verfahren zur Oxidation von PMIDA in wässriger Lösung mit Wasserstoffperoxid in Gegenwart eines Aktivkohlekatalysators wie es beispielsweise in WO 96/38455 und US-A-5 948 938 beschrieben ist. Die Beispiele sind in keiner Weise beschränkend. Sie geben vielmehr grundlegende Verfahren zur Rückführung der Mutterlauge in den Prozess wieder.

### Beispiel 1 (B1)

### Rückführung der Mutterlauge in Stufe c) (Aufkonzentrierung)

Ein Filtrat B1-1 nach Abtrennung des aus der eingeengten Reaktionsmischung kristallisierten Produkts eines Oxidationsprozesses bei 60 bis 65 °C zeigt die in der Tabelle 1 dargestellte typische Zusammensetzung der Inhaltsstoffe (vgl. Beispiel 1(8) der US-A-5 948 938). Die Oxidationsreaktion wird erneut durchgeführt, wobei das gesamte Filtrat B1-1 nach dem erfindungsgemäßen Kreisprozess ohne Ausschleusung eines Teilstromes in die Stufe c) (Aufkonzentrierung) zurückgeführt wird. Die Zusammensetzung des Filtrats B1-6 nach der 5. Rückführung ist ebenfalls in der Tabelle 1 dargestellt.

**Tabelle 1**

| **Inhaltsstoff** | **Filtrat B1-1 ohne Rückführung [%]** | **Filtrat B1-6 nach der 5. Rückführung [%]** |
|---|---|---|
| **PMG**^{**1**} | 1,2 | 1,3 |
| **PMIDA**^{**2**} | < 0,2 | < 0,2 |
| **AMPS**^{**3**} | 0,3 | 0,5 |
| **N-Me-PMG**^{**4**} | 0,9 | 1,3 |
| **Phosphat** | 0,2 | 1,0 |
| | | |
| **Formaldehyd** | 0,5 | 1,0 |
| **Formiat** | 3,7 | 12,4 |

| | | |
|---|---|---|
| Zeichenerklärung: ¹PMG N-(Phosphonomethyl)glycin = Glyphosate | | |
| ²PMIDA N-(Phosphonomethyl)iminodiessigsäure | | |
| ³AMPS Aminomethanphosphonsäure | | |
| ⁴N-Me-PMG N-Methyl-N-(phosphonomethyl)glycin | | |

**Tabelle 2:**

| Vergleichsbeispiel*) aus Beispiel 1(8) der US-A-5 948 938 | | |
|---|---|---|
| | **Reinheit PMG [%]** | **Ausbeute PMG [%]** |
| **Vergleichsbeispiel*) OHNE Rückführung** | 98,2 | 85,9 |
| **Erfindungsgemäßes Beispiel mit 5 Rückführungen** | 98,9 - 98,3 | 87,6 - 92,0 |
| | ⌀ 98,5 | ⌀ 89,9 |

In der Tabelle 2 sind die Reinheit und die Ausbeute von Glyphosate *mit* Rückführung des Filtrats dem Vergleichsbeispiel *ohne* Rückführung des Filtrats gegenübergestellt. Durch die Führung des Filtrats im erfindungsgemäßen Kreislauf wird das Produkt mit gleichbleibender Reinheit wie beim Vergleichsbeispiel erhalten. Zusätzlich wird die Ausbeute an Glyphosate gesteigert und die Menge an Filtrat um das sechsfache verringert.

### Beispiel 2 (B2)

### Rückführung der Mutterlauqe in Stufe c) (Aufkonzentrierung)

Ein Filtrat B2-1 nach Abtrennung des aus der eingeengten Reaktionsmischung kristallisierten Produkts eines Oxidationsprozesses bei 90 bis 95°C zeigt die in der Tabelle 3 dargestellte typische Zusammensetzung der Inhaltsstoffe (vgl. Beispiel 5(7) der US-A-5 948 938). Die Oxidationsreaktion wird erneut durchgeführt, wobei das gesamte Filtrat B2-1 nach dem erfindungsgemäßen Kreisprozess ohne Ausschleusung eines Teilstromes in die Stufe c) (Aufkonzentrierung) zurückgeführt wird. Die Zusammensetzung der Filtrate B2-6 nach der 5. Rückführung und B2-10 nach der 9. Rückführung sind ebenfalls in der Tabelle 3 dargestellt.

**Tabelle 3**

| **Inhaltsstoff** | **Filtrat B2-1 ohne Rückführung [%]** | **Filtrat B2-6 nach der 5. Rückführung [%]** | **Filtrat B2-10 nach der 9. Rückführung [%]** |
|---|---|---|---|
| **PMG** | 1,2 | 4,3 | 5,4 |
| **PMIDA** | < 0,2 | < 0,2 | < 0,2 |
| **AMPS** | 0,4 | 4,1 | 4,7 |
| **N-Me-PMG** | 1,5 | 4,5 | 5,6 |
| **Phosphat** | 0,4 | 4,4 | 6,8 |
| | | | |
| **Formaldehyd** | 0,5 | 1,0 | 1,0 |
| **Formiat** | 3,7 | 6,4 | 6,6 |

In der Tabelle 4 sind die Reinheit und die Ausbeute von Glyphosate *mit* Rückführung des Filtrats dem Vergleichsbeispiel *ohne* Rückführung des Filtrats gegenübergestellt. Durch die Führung des Filtrats im erfindungsgemäßen Kreislauf wird das Produkt mit gleichbleibender Reinheit wie beim Vergleichsbeispiel erhalten. Zusätzlich wird die Ausbeute an Glyphosate gesteigert und die Menge an Filtrat um das sechs- bzw. 10-fache verringert.

**Tabelle 4:**

| Vergleichsbeispiel*) aus Beispiel 5(7) der US-A-5 948 938 | | |
|---|---|---|
| | **Reinheit PMG [%]** | **Ausbeute PMG [%]** |
| **Vergleichsbeispiel*) OHNE Rückführung** | 98,4 | 79,2 |
| **Erfindungsgemäßes Beispiel mit 5 Rückführungen** | 99,6 - 97,0 | 85,1 - 91,0 |
| | ⌀ 98,2 | ⌀ 88,8 |
| **Erfindungsgemäßes Beispiel mit 9 Rückführungen** | 99,6 - 96,2 | 85,1 - 92,6 |
| | ⌀ 98,0 | ⌀ 90,0 |

### Beispiel 3 (B3)

### Rückführung der Mutterlauge in Stufe b) (Katalysator-Abtrennung)

Ein Filtrat B3-1 nach Abtrennung des aus der eingeengten Reaktionsmischung kristallisierten Produkts eines Oxidationsprozesses bei 90 - 95°C zeigt die in der Tabelle 5 dargestellte typische Zusammensetzung der Inhaltsstoffe (vgl. Beispiel 5(7) der US-A-5 948 938). Die Oxidationsreaktion wird erneut durchgeführt, wobe das gesamte Filtrat B3-1 nach dem erfindungsgemäßen Kreisprozess ohne Ausschleusung eines Teilstromes in die Stufe b) (Katalysatorabtrennung) zurückgeführt wird. Die Zusammensetzung des Filtrats B3-4 nach der 3. Rückführung ist ebenfalls in der Tabelle 5 dargestellt.

**Tabelle 5**

| Inhaltsstoff | Filtrat B3-1 ohne Rückführung [%] | Filtrat B3-4 nach der 3. Rückführung [%] |
|---|---|---|
| **PMG** | 2,5 | 3,7 |
| **PMIDA** | 0,3 | 1,8 |
| **AMPS** | 0,2 | 0,8 |
| **N-Me-PMG** | 0,9 | 2,2 |
| **Phosphat** | 0,4 | 1,8 |
| | | |
| **Formaldehyd** | 0,2 | 0,3 |
| **Formiat** | 2,9 | 6,1 |

**Tabelle 6:**

| Vergleichsbeispiel*) aus Beispiel 5(7) der US-A-5 948 938 | | |
|---|---|---|
| | **Reinheit PMG [%]** | **Ausbeute PMG [%]** |
| **Vergleichsbeispiel*) OHNE Rückführung** | 98,4 | 79,2 |
| **Erfindungsgemäßes Beispiel** | 97,7 | 76,9 |
| **1. Ansatz Erfindungsgemäßes Beispiel** | 97,1 - 97,4 | 86,2 - 90,3 |
| **2. - 4. Ansatz mit Rückführung Erfindungsgemäßes Beispiel, Mittelwert mit Rückführung** | ⌀ 97,4 | ⌀ 85,0 |

In der Tabelle 6 sind die Reinheit und die Ausbeute von Glyphosate *mit* Rückführung des Filtrats dem Vergleichsbeispiel *ohne* Rückführung des Filtrats gegenübergestellt. Durch die Führung des Filtrats im erfindungsgemäßen Kreislauf wird das Produkt mit etwa gleichbleibender Reinheit wie beim Vergleichsbeispiel erhalten. Zusätzlich wird die Ausbeute an Glyphosate deutlich gesteigert und die Menge an Filtrat um das vierfache verringert.

## Patentansprüche (Patentansprüche für folgende(n) Vertragsstaat(en): AT, BE, CH, LI, CY, DK, ES, FI, FR, GB, GR, IE, IT, LU, MC, NL, PT, SE, TR)

1. Verfahren zur Herstellung von N-(Phosphonomethyl)glycin durch
(a) Oxidation von N-(Phosphonomethyl)iminodiessigsäure (PMIDA) mit Peroxiden oder sauerstoff-haltigen Gasen in wässrigem Medium in Gegenwart eines heterogenen Katalysators,
(b) anschließende Abtrennung des Katalysators aus der wässrigen Reaktionssuspension von Stufe (a),
(c) Aufkonzentrierung der Reaktionslösung aus Stufe (b) und
(d) Abtrennung von N-(Phosphonomethyl)glycin aus der aufkonzentrierten Reaktionslösung aus Stufe (c),
**dadurch gekennzeichnet,**
**dass** man die wässrige Reaktionslösung aus Stufe (d) (Mutterlauge) zumindest teilweise in Stufe (b) (Katalysatorabtrennung) und/oder Stufe (c) (Aufkonzentrierung) zurückführt.

2. Verfahren nach Anspruch 1,
**dadurch gekennzeichnet,**
**dass** man als Katalysator in Stufe (a) Aktivkohle einsetzt.

3. Verfahren nach einem der Ansprüche 1 und 2,
**dadurch gekennzeichnet,**
**dass** man als Katalysator in Stufe (a) Edelmetalle, ausgewählt aus der Gruppe Palladium, Platin und Rhodium, verwendet, die auf einem Trägermaterial, insbesondere Aktivkohle, fixiert sind.

4. Verfahren nach einem der Ansprüche 1 bis 3,
**dadurch gekennzeichnet,**
**dass** der Katalysator in einer Menge von 2 bis 50 Gew.-%, bezogen auf die Menge an eingesetzter PMIDA, verwendet wird.

5. Verfahren nach einem der Ansprüche 1 bis 4,
**dadurch gekennzeichnet,**
**dass** man, bei der Umsetzung mit Peroxiden, das Molverhältnis von PMIDA zu Peroxid auf 1:1,5 bis 1:5 einstellt.

6. Verfahren nach einem der Ansprüche 1 bis 5,
**dadurch gekennzeichnet,**
**dass** man Stufe (a) in einem Temperaturbereich von 50 bis 150°C.

7. Verfahren nach einem der Ansprüche 1 bis 6,
**dadurch gekennzeichnet,**
**dass** die Oxidation gemäß Stufe (a) im Druckbereich von 0,5 bis 50 bar erfolgt.

8. Verfahren nach einem der Ansprüche 1 bis 7,
**dadurch gekennzeichnet,**
**dass** man die Konzentration der eingesetzten PMIDA in der wässrigen Suspension in Stufe (a) auf 1 bis 30 Gew.-% einstellt.

9. Verfahren nach einem der Ansprüche 1 bis 8,
**dadurch gekennzeichnet,**
**dass** man den Katalysator in Stufe (b) durch Filtration aus der wässrigen Reaktionssuspension abtrennt.

10. Verfahren nach Anspruch 9,
**dadurch gekennzeichnet,**
**dass** man die Filtration in Stufe (b) bei 50 bis 100°C vornimmt.

11. Verfahren nach einem der Ansprüche 1 bis 10,
**dadurch gekennzeichnet,**
**dass** man die Reaktionslösung in Stufe (c) durch Eindampfen aufkonzentriert.

12. Verfahren nach einem der Ansprüche 1 bis 11,
**dadurch gekennzeichnet,**
**dass** man die Reaktionslösung in Stufe (c) bis zu einem Wassergehalt von 10 bis 70 Gew.-% aufkonzentriert.

13. Verfahren nach einem der Ansprüche 1 bis 12,
**dadurch gekennzeichnet,**
**dass** man die Aufkonzentrierung der Reaktionslösung in Stufe (c) bei Temperaturen von 20 bis 90°C und einem Vakuum von 20 bis 700 mbar durchführt.

14. Verfahren nach einem der Ansprüche 1 bis 13,
**dadurch gekennzeichnet,**
**dass** man N-(Phosphonomethyl)glycin in Stufe (d) durch Filtration abtrennt.

15. Verfahren nach einem der Ansprüche 1 bis 14,
**dadurch gekennzeichnet,**
**dass** eine wässrige Reaktionslösung aus Stufe (d) (Mutterlauge) zurückgeführt wird, die geringe Mengen an N-(Phosphonomethyl)glycin und Nebenprodukte enthält.

16. Verfahren nach einem der Ansprüche 1 bis 15,
**dadurch gekennzeichnet, dass** die Oxidationstufe (a) zur Herstellung von Glyphosaten batchweise erfolgt, und
dass die Mutterlauge bei der Aufarbeitung des nachfolgenden Ansatzes entweder in Stufe (b) und/oder Stufe (c) ganz oder teilweise eingesetzt und auf diese Weise in einem Kreisprozess eingebunden wird.

17. Verfahren nach einem der Ansprüche 1 bis 16,
**dadurch gekennzeichnet,**
**dass** die Rückführung der Mutterlauge in 5 bis 10 Reaktionszyklen vorgenommen wird.

## Patentansprüche (Patentansprüche für folgende(n) Vertragsstaat(en): DE)

1. Verfahren zur Herstellung von N-(Phosphonomethyl)glycin durch
(a) Oxidation von N-(Phosphonomethyl)iminodiessigsäure (PMIDA) mit sauerstoff-haltigen Gasen in wässrigem Medium in Gegenwart eines heterogenen Katalysators,
(b) anschließende Abtrennung des Katalysators aus der wässrigen Reaktionssuspension von Stufe (a),
(c) Aufkonzentrierung der Reaktionslösung aus Stufe (b) und
(d) Abtrennung von N-(Phosphonomethyl)glycin aus der aufkonzentrierten Reaktionslösung aus Stufe (c),
**dadurch gekennzeichnet,**
**dass** man die wässrige Reaktionslösung aus Stufe (d) (Mutterlauge) zumindest teilweise in Stufe (b) (Katalysatorabtrennung) und/oder Stufe (c) (Aufkonzentrierung) zurückführt.

2. Verfahren nach Anspruch 1,
**dadurch gekennzeichnet,**
**dass** man als Katalysator in Stufe (a) Aktivkohle einsetzt.

3. Verfahren nach einem der Ansprüche 1 und 2,
**dadurch gekennzeichnet,**
**dass** man als Katalysator in Stufe (a) Edelmetalle, ausgewählt aus der Gruppe Palladium, Platin und Rhodium, verwendet, die auf einem Trägermaterial, insbesondere Aktivkohle, fixiert sind.

4. Verfahren nach einem der Ansprüche 1 bis 3,
**dadurch gekennzeichnet,**
**dass** der Katalysator in einer Menge von 2 bis 50 Gew.-%, bezogen auf die Menge an eingesetzter PMIDA, verwendet wird.

5. Verfahren nach einem der Ansprüche 1 bis 4
**dadurch gekennzeichnet,**
**dass** man Stufe (a) in einem Temperaturbereich von 50 bis 150°C.

6. Verfahren nach einem der Ansprüche 1 bis 5,
**dadurch gekennzeichnet,**
**dass** die Oxidation gemäß Stufe (a) im Druckbereich von 0,5 bis 50 bar erfolgt.

7. Verfahren nach einem der Anspräche 1 bis 6,
**dadurch gekennzeichnet,**
**dass** man die Konzentration der eingesetzten PMIDA in der wässrigen Suspension in Stufe (a) auf 1 bis 30 Gew.-% einstellt.

8. Verfahren nach einem der Ansprüche 1 bis 7,
**dadurch gekennzeichnet,**
**dass** man den Katalysator in Stufe (b) durch Filtration aus der wässrigen Reaktionssuspension abtrennt.

9. Verfahren nach Anspruch 8,
**dadurch gekennzeichnet,**
**dass** man die Filtration in Stufe (b) bei 50 bis 100°C vornimmt.

10. Verfahren nach einem der Ansprüche 1 bis 9,
**dadurch gekennzeichnet,**
**dass** man die Reaktionslösung in Stufe (c) durch Eindampfen aufkonzentriert.

11. Verfahren nach einem der Ansprüche 1 bis 10,
**dadurch gekennzeichnet,**
**dass** man die Reaktionslösung in Stufe (c) bis zu einem Wassergehalt von 10 bis 70 Gew.-% aufkonzentriert.

12. Verfahren nach einem der Ansprüche 1 bis 11,
**dadurch gekennzeichnet,**
**dass** man die Aufkonzentrierung der Reaktionslösung in Stufe (c) bei Temperaturen von 20 bis 90°C und einem Vakuum von 20 bis 700 mbar durchführt.

13. Verfahren nach einem der Ansprüche 1 bis 12,
**dadurch gekennzeichnet,**
**dass** man N-(Phosphonomethyl)glycin in Stufe (d) durch Filtration abtrennt.

14. Verfahren nach einem der Ansprüche 1 bis 13,
**dadurch gekennzeichnet,**
**dass** eine wässrige Reaktionslösung aus Stufe (d) (Mutterlauge) zurückgeführt wird, die geringe Mengen an N-(Phosphonomethyl)glycin und Nebenprodukte enthält.

15. Verfahren nach einem der Ansprüche 1 bis 14,
**dadurch gekennzeichnet, dass** die Oxydationstufe (a) zur Herstellung von Glyphosaten batchweise erfolgt, und
dass die Mutterlauge bei der Aufarbeitung des nachfolgenden Ansatzes entweder in Stufe (b) und/oder Stufe (c) ganz oder teilweise eingesetzt und auf diese Weise in einem Kreisprozess eingebunden wird.

16. Verfahren nach einem der Ansprüche 1 bis 15,
**dadurch gekennzeichnet,**
**dass** die Rückführung der Mutterlauge in 5 bis 10 Reaktionszyklen vorgenommen wird.

## Claims (Claims for the following Contracting State(s): AT, BE, CH, LI, CY, DK, ES, FI, FR, GB, GR, IE, IT, LU, MC, NL, PT, SE, TR)

1. Method for the production of N-(phosphonomethyl)glycine by
(a) oxidation of N-(phosphonomethyl)iminodiacetic acid (PMIDA) with peroxides or oxygen-containing gases in aqueous medium in the presence of a heterogeneous catalyst,
(b) subsequent separation of the catalyst from the aqueous reaction suspension from stage (a),
(c) concentration of the reaction solution from stage (b) and
(d) separation of N-(phosphonomethyl)glycine from the concentrated reaction solution from stage (c),
**characterized in that** the aqueous reaction solution from stage (d) (mother liquor) is recycled at least in part to stage (b) (catalyst separation) and/or stage (c) (concentration).

2. A method according to claim 1 **characterized in that** activated carbon is used as catalyst in stage (a).

3. A method according to one of Claims 1 and 2 **characterized in that** one uses precious metals selected from the palladium, platinum and rhodium group, which are fixed on a carrier material, especially activated carbon, as catalyst in stage (a).

4. A method according to one of claims 1 to 3 **characterized in that** the catalyst is used in a quantity from 2 to 50% by weight, based on the quantity of PMIDA used.

5. A method according to one of claims 1 to 4 **characterized in that**, during the reaction with peroxides, the molar ratio of PMIDA to peroxide is adjusted to a range from 1:1.5 to 1:5.

6. A method according to one of claims 1 to 5 **characterized in that** stage (a) is carried out at a temperature in the range from 50 to 150°C.

7. A method according to one of claims 1 to 6 **characterized in that** the oxidation according to stage (a) takes place in a pressure range from 0.5 to 50 bar.

8. A method according to one of claims 1 to 7 **characterized in that** the concentration of the PMIDA used in the aqueous suspension in stage (a) is adjusted to 1 to 30% by weight.

9. A method according to one of claims 1 to 8 **characterized in that** the catalyst in stage (b) is separated from the aqueous reaction suspension by filtration.

10. A method according to claim 9 **characterized in that** the filtration in stage (b) is carried out at 50 to 100°C.

11. A method according to one of claims 1 to 10 **characterized in that** the reaction solution in stage (c) is concentrated by evaporation.

12. A method according to one of claims 1 to 11 **characterized in that** the reaction solution is concentrated in stage (c) to a water content from 10 to 70% by weight.

13. A method according to one of claims 1 to 12 **characterized in that** the concentration of the reaction solution in stage (c) is carried out at temperatures from 20 to 90°C and in a vacuum from 20 to 700 mbar.

14. A method according to one of claims 1 -to 13 **characterized in that** N-(phosphonomethyl)glycine in stage (d) is separated by filtration.

15. A method according to one of claims 1 to 14 **characterized in that** an aqueous reaction solution from stage (d) (mother liquor) containing small quantities of N-(phosphonomethyl)glycine and byproducts is recycled.

16. A method according to one of claims 1 to 15 **characterized in that** in the working up of the following batch the mother liquor is totally or partly used in stage (b) and/or stage (c) and in this manner is included in a recycling process.

17. A method according to one of claims 1 to 16 **characterized in that** the recycling of the mother liquor is conducted in 5 to 10 reaction cycles.

## Claims (Claims for the following Contracting State(s): DE)

1. Method for the production of N-(phosphonomethyl)glycine by
(a) oxidation of N-(phosphonomethyl)iminodiacetic acid (PMIDA) with oxygen-containing gases in aqueous medium in the presence of a heterogeneous catalyst.
(b) subsequent separation of the catalyst from the aqueous reaction suspension from stage (a).
(c) concentration of the reaction solution from stage (b) and
(d) separation of N-(phosphonomethyl)glycine from the concentrated reaction solution from stage (c),
**characterized in that** the aqueous reaction solution from stage (d) (mother liquor) is recycled at least in part to stage (b) (catalyst separation) and/or stage (c) (concentration).

2. A method according to claim 1 **characterized in that** activated carbon is used as catalyst in stage (a).

3. A method according to one of claims 1 and 2 **characterized in that** one uses precious metals selected from the palladium, platinum and rhodium group, which are fixed on a carrier material, especially activated carbon, as catalyst in stage (a).

4. A method according to one of claims 1 to 3 **characterized in that** the catalyst is used in a quantity from 2 to 50% by weight, based on the quantity of PMIDA used.

5. A method according to one of claims 1 to 5 1 **characterized in that** stage (a) is carried out at a temperature in the range from 50 to 150°C.

6. A method according to one of claims 1 to 5 **characterized in that** the oxidation according to stage (a) takes place in a pressure range from 0.5 to 50 bar.

7. A method according to one of claims 1 to 6 **characterized in that** the concentration of the PMIDA used in the aqueous suspension in stage (a) is adjusted to 1 to 30% by weight.

8. A method according to one of claims 1 to 7 **characterized in that** the catalyst in stage (b) is separated from the aqueous reaction suspension by filtration.

9. A method according to claim 8 **characterized in that** the filtration in stage (b) in carried out at 50 to 100°C.

10. A method according to one of claims 1 to 9 **characterized in that** the reaction solution in stage (c) is concentrated by evaporation.

11. A method according to one of claims 1 to 10 **characterized in that** the reaction solution is concentrated in stage (c) to a water content from 10 to 70% by weight.

12. A method according to one of claims 1 to 11 **characterized in that** the concentration of the reaction solution in stage (c) is carried out at temperatures from 20 to 90°C and in a vacuum from 20 to 700 mbar.

13. A method according to one of claims 1 to 12 **characterized in that** N-(phosphonomethyl)glycine in stage (d) is separated by filtration.

14. A method according to one of claims 1 to 13 **characterized in that** an aqueous reaction solution from stage (d) (mother liquor) containing small quantities of N-(phosphonomethyl)glycine and byproducts is recycled.

15. A method according to one of claims 1 to 14 **characterized in that** the oxidation stage (a) for the production of glyphosates is conducted batchwise, and in the working up of the following batch the mother liquor is totally or partly used in stage (b) and/or stage (c) and in this manner is included in a recycling process.

16. A method according to, one of claims 1 to 15 **characterized in that** the recycling of the mother liquor is conducted in 5 to 10 reaction cycles.

## Revendications (Revendications pour l'(les) Etat(s) contractant(s) suivant(s): AT, BR, CH, LI, CY, BK, ES, FI, FR, GB, GR, IE, IT, LU, MC, NL, PT, SE, TR)

1. Procédé de préparation de N-(phosphonométhyl)glycine, par
(a) oxydation d'acide N-(phosphonométhyl)iminodiacétique (PMIDA) avec des gaz contenant des peroxydes ou de l'oxygène, dans un milieu aqueux, en présence d'un catalyseur hétérogène,
(b) séparation subséquente du catalyseur à partir de la suspension de réaction aqueuse de l'étape (a),
(c). concentration de la solution de réaction issue de l'étape (b), et
(d) concentration de la N-(phosphonométhyl)glycine à partir de la solution de réaction concentrée issue de l'étape (c),
**caractérisé en ce que**
l'on recycle au moins partiellement la solution de réaction aqueuse issue de l'étape (d) (liqueur mère), au moins partiellement à l'étape (b) (séparation du catalyseur) et/ou à l'étape (c) (concentration).

2. Procédé selon la revendication 1,
**caractérisé en ce que**
l'on utilise du charbon actif comme catalyseur à l'étape (a).

3. Procédé selon l'une des revendications 1 et 2,
**caractérisé en ce que**
l'on utilise comme catalyseur à l'étape (a) des métaux nobles, sélectionnés dans le groupe du palladium, platine, et rhodium, ayant été fixés sur un matériau support, en particulier du charbon actif.

4. Procédé selon l'une des revendications 1 à 3,
**caractérisé en ce que**
le catalyseur est utilisé en une quantité de 2 à 50 % en poids en poids, en se référant à la quantité de PMIDA utilisée.

5. Procédé selon l'une des revendications 1 à 4,
**caractérisé en ce que**,
lors de la réaction avec des peroxydes, on régle le rapport molaire du PMIDA par rapport au peroxyde à une valeur de 1:1,5 à 1:5.

6. Procédé selon l'une des revendications 1 à 5,
**caractérisé en ce que**
l'on effectue l'étape (a) dans une plage de températures de 50 à 150° C.

7. Procédé selon l'une des revendications 1 à 6,
**caractérisé en ce que**
l'oxydation selon l'étape (a) se fait dans la plage d'e pressions de 0,5 à 50 bar.

8. Procédé selon l'une des revendications 1 à 7,
**caractérisé en ce que**,
à l'étape (a), on règle la concentration du PMIDA utilisé, dans la suspension aqueuse, à une valeur de 1 à 30 % en poids.

9. Procédé selon l'une des revendications 1 à 8,
**caractérisé en ce que**,
à l'étape (b), on sépare le catalyseur de la réaction de suspension aqueuse, par filtration.

10. Procédé selon la revendication 9,
**caractérisé en ce que**,
à l'étape (b), on effectue la filtration à une température de 50 à 100°C.

11. Procédé selon l'une des revendications 1 à 10,
**caractérisé en ce que**,
à l'étape (c), l'on concentre la solution de réaction, par évaporation.

12. Procédé selon l'une des revendications 1 à 11,
**caractérisé en ce que**,
à l'étape (c), on concentre la solution de réaction jusqu'à atteinte d'une teneur en eau de 10 à 70 % en poids.

13. Procédé selon l'une des revendications 1 à 12,
**caractérisé en ce que**,
à l'étape (c), on augmente la concentration de la solution de réaction, à des températures de 20 à 90°C, sous un vide de 20 à 700 mbar.

14. Procédé selon l'une des revendications 1 à 13,
**caractérisé en ce que**,
à l'étape (d), on effectue la séparation de la N-(phosphonométhyl)glycine par filtration.

15. Procédé selon l'une des revendications 1 à 14,
**caractérisé en ce que**
l'on recycle une solution de réaction aqueuse issue de l'étape (d) (liqueur mère), contenant de faibles quantités de N-(phosphonométhyl)glycine et de sous-produits.

16. Procédé selon l'une des revendications 1 à 15,
**caractérisé en ce que**
l'étape (a) d'oxydation, servant à la préparation de glyphosates, s'effectue par lots, et
**en ce que**, à l'étape (b) et/ou (c), lors de l'élaboration de la préparation suivante, la liqueur mère est utilisée en totalité ou en partie et est intégrée de cette manière en un processus en circuit en boucle.

17. Procédé selon l'une des revendications 1 à 16,
**caractérisé en ce que**
la recirculation de la liqueur mère est effectuée en 5 à 10 cycles de réaction.

## Revendications (Revendications pour l'(les) Etat(s) contractant(s) suivant(s): DE)

1. Procédé de préparation de N-(phosphonométhyl)glycine, par
(a) oxydation d'acide N-(phosphonométhyl)iminodiacétique (PMIDA) avec des gaz contenant de l'oxygène, dans un milieu aqueux, en présence d'un catalyseur hétérogène,
(b) séparation subséquente du catalyseur à partir de la suspension de réaction aqueuse de l'étape (a),
(c) concentration de la solution de réaction issue de l'étape (b), et
(d) concentration de la N-(phosphonométhyl)glycine à partir de la solution de réaction concentrée issue de l'étape (c)
**caractérisé en ce que**
l'on recycle au moins partiellement la solution de réaction aqueuse issue de l'étape (d) (liqueur mère), au moins partiellement à l'étape (b) (séparation du catalyseur) et/ou à l'étape (c) (concentration).

2. procédé selon la revendication 1,
**caractérisé en ce que**
l'on utilise du charbon actif comme catalyseur à l'étape (a).

3. Procédé selon l'une des revendications 1 et 2,
**caractérisé en ce que**
l'on utilise comme catalyseur à l'étape (a) des métaux nobles, sélectionnés dans le groupe du palladium, platine, et rhodium, ayant été fixés sur un matériau support, en particulier du charbon actif.

4. Procédé selon l'une des revendications 1 à 3,
**caractérisé en ce que**
le catalyseur est utilisé en une quantité de 2 à 50 % en poids en poids, en se référant à la quantité de PMIDA utilisée.

5. Procédé selon l'une des revendications 1 à 4,
**caractérisé en ce que**,
l'on effectue l'étape (a) dans une plage de températures de 50 à 150° C.

6. Procédé selon l'une des revendications 1 à 5,
**caractérisé en ce que**
l'oxydation selon l'étape (a) se fait dans la plage de pressions de 0,5 à 50 bar.

7. Procédé selon l'une des revendications 1 à 6,
**caractérisé en ce que**,
à l'étape (a), on règle la concentration du PMIDA utilisé, dans la suspension aqueuse, à une valeur de 1 à 30 % en poids.

8. Procédé selon l'une des revendications 1 à 7,
**caractérisé en ce que**,
à l'étape (b), on sépare le catalyseur de la réaction de suspension aqueuse, par filtration.

9. Procédé selon la revendication 8,
**caractérisé en ce que**,
à l'étape (b), on effectue la filtration à une température de 50 à 100°C.

10. Procédé selon l'une des revendications 1 à 9,
**caractérisé en ce que**,
à l'étape (c), l'on concentre la solution de réaction, par évaporation.

11. Procédé selon l'une des revendications 1 à 10,
**caractérisé en ce que**,
à l'étape (c), on concentre la solution de réaction jusqu'à atteinte d'une teneur en eau de 10 à 70 % en poids.

12. Procédé selon l'une des revendications 1 à 11,
**caractérisé en ce que**,
à l'étape (c), on augmente la concentration de la solution de réaction, à des températures de 20 à 90°C, sous un vide de 20 à 700 mbar.

13. Procédé selon l'une des revendications 1 à 12,
**caractérisé en ce que**,
à l'étape (d), on effectue, la séparation de la N-(phosphonométhyl)glycine par filtration.

14. Procédé selon l'une des revendications 1 à 13,
**caractérisé en ce que**
l'on recycle une solution de réaction aqueuse issue de l'étape (d) (liqueur mére), contenant de faibles quantités de N-(phosphonométhyl)glycine et de sous-produits.

15. Procédé selon l'une des revendications 1 à 14,
**caractérisé en ce que**
l'étape (a) d'oxydation, servant à la préparation de glyphosates, s'effectue par lots, et
**en ce que**, à l'étape (b) et/ou (c), lors de l'élaboration de la préparation suivante, la liqueur mère est utilisée en totalité ou en partie et est intégrée de cotte manière en un processus en circuit en boucle.

16. Procédé selon l'une des revendications 1 à 15,
**caractérisé en ce que**
la recirculation de la liqueur mère est effectuée en 5 à 10 cycles de réaction.
